# EUROPÄISCHE PATENTSCHRIFT

(11) **EP 3 150 424 B1**
(45) Veröffentlichungstag und Bekanntmachung des Hinweises auf die Patenterteilung: **01.05.2019**
(21) Anmeldenummer: 16001686.1
(22) Anmeldetag: 29.07.2016
(51) Int. Cl.: H02J 7/00, B60L 15/32, B60L 11/00, H02J 50/10

(54) **VERFAHREN UND VORRICHTUNG ZUM ENERGIEMANAGEMENT IN EINEM KRAFTFAHRZEUG MIT MINDESTENS ZWEI ANGETRIEBENEN FAHRZEUGACHSEN**
METHOD AND DEVICE FOR ENERGY MANAGEMENT IN A MOTOR VEHICLE HAVING AT LEAST TWO DRIVEN VEHICLE AXLES
PROCEDE ET DISPOSITIF DE GESTION D'ENERGIE DANS UN VEHICULE AUTOMOBILE COMPRENANT AU MOINS DEUX ESSIEUX ENTRAINES

(30) Priorität: 30.09.2015 DE 102015012677
(43) Veröffentlichungstag der Anmeldung: 05.04.2017
(73) Patentinhaber: MAN Truck & Bus AG, 80995 München (DE)
(72) Erfinder: Mayer, Florian, 83026 Rosenheim/Eising (DE); Fissmann, Tobias, 81543 München (DE)
(74) Vertreter: v. Bezold & Partner Patentanwälte - PartG mbB

(56) Entgegenhaltungen:
- DE-B3-102013 205 164
- US-A1- 2010 006 351
- US-B1- 6 886 647

## Beschreibung

Die Erfindung betrifft ein Verfahren zum Energiemanagement in einem Kraftfahrzeug mit mindestens zwei elektromotorisch angetriebenen Fahrzeugachsen. Die Erfindung betrifft ferner eine Vorrichtung, die ausgebildet ist, das Verfahren durchzuführen.

Elektrofahrzeuge oder Hybridfahrzeuge, z. B. Plug-in-Hybridfahrzeuge, können über zwei oder mehr Achsen angetrieben werden. Dabei werden in der Regel alle elektrischen Antriebe über ein einziges elektrisches Leistungsnetz gespeist. Es ist aber auch möglich, für jedes Antriebssystem (z. B. jede angetriebene Achse) ein separates unabhängiges Leistungsnetz, bestehend aus mindestens einer elektrischen Maschine, einer Leistungselektronik und einem Energiespeichersystem, vorzusehen.

Im Verlaufe von Fahr- und Bremsmanövern können sich über unterschiedliche Eigenschaften und Betriebsanforderungen innerhalb der Speichersysteme verschiedene Ladezustände (SOC) einstellen. Diese sollten von Zeit zu Zeit oder gezielt nach Bedarf, geregelt oder gesteuert durch das zentrale Fahrzeugenergiemanagement, wieder auf ein bestimmtes - meist ausgeglichenes - Niveau gebracht werden. Diesen Ausgleichsvorgang bezeichnet man als Balancing.

Üblicherweise geschieht dies durch eine weitere im Fahrzeugsystem verbaute Komponente in Form eines Gleichspannungswandlers (DC/DC-Wandler), über den die separaten Leistungsnetze koppelbar bzw. gekoppelt sind. Dieser regelt den Energieinhalt der ansonsten weitgehend unabhängigen Systeme und verbindet sie energetisch miteinander. Somit sind entsprechende Hochvolt (HV)-Leitungen zwischen den Leistungssystemen notwendig, über die die separaten Leistungsnetze mit dem Gleichspannungswandler verbunden werden.

Nachteilig hieran ist, dass der Gleichspannungswandler eine Komponente mit vergleichsweise hohen Bauteilkosten ist und dass auch für die HV-Leitungen zusätzliche Kosten anfallen.

Aus der Offenlegungsschrift DE 10 2013 205 164 B3 ist ein elektrisch angetriebenes Fahrzeug mit einer Vorder- und Hinterachse bekannt, wobei je Fahrzeugachse eine Bauteilgruppe bestehend aus Elektromotor, Generator und Batterie angebracht ist und die Bewegungsenergie des Fahrzeugs zum Energietransfer zwischen den Batterien verwendet wird.

Aus der US 2010/0006351 A1 ist ein elektrisch angetriebenes Fahrzeug mit mehreren Rädern bekannt, bei welchem ein Teil der zur Bewegung aufgewendeten Energie über ein an jeder Radaufhängung angebrachtes System aus Elektromotor und separaten Generator rekuperiert wird, indem die Drehbewegung momentan nicht angetriebener Räder zur Stromerzeugung verwendet wird.

Es ist somit eine Aufgabe der Erfindung, ein verbessertes Verfahren zum Energiemanagement in einem Kraftfahrzeug mit mindestens zwei elektromotorisch angetriebenen Fahrzeugachsen bereitzustellen, mit dem Nachteile herkömmlicher Techniken vermieden werden können. Die Aufgabe der Erfindung ist es insbesondere, ein verbessertes Verfahren zum Energiemanagement in einem Kraftfahrzeug mit mindestens zwei elektromotorisch angetriebenen Fahrzeugachsen bereitzustellen, das kostengünstiger realisierbar ist. Eine weitere Aufgabe der Erfindung ist es, eine Vorrichtung bereitzustellen, die ausgebildet ist, ein entsprechend verbessertes Verfahren durchzuführen.

Diese Aufgaben werden durch Vorrichtungen und Verfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Im Rahmen der Erfindung wurde festgestellt, dass die Kosten für den Gleichspannungswandler und die HV-Leitungen zwischen den Leistungssystemen, über die die separaten Leistungsnetze mit dem Gleichspannungswandler verbunden werden, eingespart werden können, wenn die natürliche mechanische Kopplung der Leitungssysteme über die Straße, auf der sich das Fahrzeug bewegt, genutzt wird, um Leistung bzw. Energie zwischen den Leistungsnetzen zu transferieren.

Gemäß allgemeinen Gesichtspunkten der Erfindung wird somit ein Verfahren zum Energiemanagement in einem Kraftfahrzeug mit mindestens zwei angetriebenen Fahrzeugachsen bereitgestellt, wobei das Kraftfahrzeug eine erste elektrische Maschine, die antriebsmäßig mit einer ersten Fahrzeugachse verbunden ist, einen ersten Energiespeicher für elektrische Energie, der zur Versorgung der ersten elektrischen Maschine vorgesehen ist, zumindest eine zweite elektrische Maschine, die antriebsmäßig mit einer zweiten Fahrzeugachse verbunden ist, und zumindest einen zweiten Energiespeicher für elektrische Energie, der zur Versorgung der zweiten elektrischen Maschine vorgesehen ist, umfasst. Die erste und die zweite elektrische Maschine sind unabhängig voneinander sowohl elektromotorisch als auch generatorisch betreibbar. Im elektromotorischen Betrieb kann der jeweils zugeordnete Energiespeicher elektrische Energie zur Verfügung stellen und im generatorischen Betrieb die erzeugte elektrische Energie zumindest zum Teil aufnehmen.

Bei Erfüllung einer Aktivierungsbedingung, zur Aktivierung eines Energietransfers zwischen dem ersten und zweiten Energiespeicher, wird ein elektromotorischer Betrieb der ersten elektrischen Maschine und ein gleichzeitiger generatorischer Betrieb der zweiten elektrischen Maschine oder umgekehrt gestartet, um unter Ausnutzung einer mechanischen Kopplung der ersten und der zweiten elektrischen Maschine über eine Straße, auf der sich das Kraftfahrzeug momentan bewegt, Energie von dem ersten in den zweiten Energiespeieher und/oder umgekehrt zu übertragen. Diese Aktivierungsbedingung wird nachfolgend als erste Aktivierungsbedingung bezeichnet, um sie von einer Aktivierungsbedingung zu unterscheiden, die eine Ladezustandsanpassung ohne Energietransfer zwischen den beiden Energiespeichern triggert und nachfolgend als zweite Aktivierungsbedingung bezeichnet wird.

Unter der mechanischen Kopplung der ersten und der zweiten elektrischen Maschine über die Straße, auf der sich das Kraftfahrzeug momentan bewegt, wird die mittelbare mechanische Kopplung der beiden elektrischen Maschinen verstanden, die sich dadurch ergibt, dass die elektrischen Maschinen jeweils über die Fahrzeugachse, mit der sie antriebsmäßig verbunden sind, und die Reifen der jeweiligen Fahrzeugachse mit der Straße und dadurch miteinander mechanisch gekoppelt sind. Wird beispielsweise die erste elektrische Maschine elektromotorisch und die zweite elektrische Maschine gleichzeitig generatorisch betrieben, wird die erste angetriebene Achse unmittelbar von der ersten elektrischen Maschine angetrieben und erzeugt so die Fahrzeugbewegung. Gleichzeitig wird die zweite angetriebene Achse über die mechanische Kopplung über die Straße durch die kinetische Fahrzeugenergie und somit mittelbar ebenfalls von der ersten elektrischen Maschine angetrieben.

Unter dem Begriff Straße ist hierbei jede Fläche zu verstehen, die zum Befahren für Fahrzeuge vorgesehen ist, z. B. eine Fahrbahn.

Die im generatorischen Betrieb der zweiten elektrischen Maschine erzeugte elektrische Energie kann dann im zweiten Energiespeicher gespeichert werden, so dass dieser aufgeladen wird. In diesem Betriebsmodus erniedrigt sich somit die im ersten Energiespeicher gespeicherte elektrische Energie, während sich die im zweiten Energiespeicher gespeicherte elektrische Energie erhöht. Entsprechend umgekehrt kann ein elektromotorischer Betrieb der zweiten elektrischen Maschine und ein gleichzeitiger generatorischer Betrieb der ersten elektrischen Maschine dazu genutzt werden, um den Ladezustand des ersten Energiespeichers anzuheben, während der Ladezustand des zweiten Energiespeichers erniedrigt wird.

Bei dem nach Erfüllung der ersten Aktivierungsbedingung gestarteten Betriebsmodus wird somit elektrische Energie aus demjenigen Energiespeicher, der der elektrischen Maschine zugeordnet ist, die elektromotorisch betrieben wird, zuerst in kinetische Energie des Fahrzeugs umgewandelt. Die kinetische Fahrzeugenergie wird dann über den generatorischen Betrieb der anderen elektrischen Maschine zum Teil wieder in elektrische Energie gewandelt, mit der der andere Energiespeicher geladen wird. In diesem Sinne kann von einem Energietransfer zwischen den beiden Energiespeichern gesprochen werden, ohne dass die beiden Energiespeicher elektrisch miteinander gekoppelt sind bzw. koppelbar sein müssen. Bei einem Energietransfer zwischen den beiden Energiespeichern wird einer der Energiespeicher geladen und ein anderer entladen.

Das Kraftfahrzeug kann ein als Hybrid- oder Elektrofahrzeug ausgeführtes Nutzfahrzeug sein. Gemäß einer besonders bevorzugten Ausführungsform der Erfindung ist das Fahrzeug ein Gliederzug, auch als Lastzug bezeichnet, bei dem das Zugfahrzeug die erste angetriebene Achse mit der zugeordneten ersten elektrischen Maschine und dem ersten elektrischen Energiespeicher aufweist und der Anhänger die zweite angetriebene Achse mit der zugeordneten zweiten elektrischen Maschine und dem zweiten elektrischen Energiespeicher aufweist.

Gemäß einer weiteren besonders bevorzugten Ausführungsform der Erfindung ist das Fahrzeug ein Gelenkbus, bei dem der Vorderwagen die erste angetriebene Achse mit der zugeordneten ersten elektrischen Maschine und dem ersten elektrischen Energiespeicher aufweist und der Hinterwagen (auch als Nachläufer bezeichnet) die zweite angetriebene Achse mit der zugeordneten zweiten elektrischen Maschine und dem zweiten elektrischen Energiespeicher aufweist.

Die erste Aktivierungsbedingung zur Aktivierung eines Energietransfers zwischen dem ersten und zweiten Energiespeicher kann einerseits vorbestimmte Betriebszustände, insbesondere Ladezustände der Energiespeicher, angeben, bei denen ein Energietransfer bzw. ein Balancing erforderlich ist, und kann andererseits geeignete Fahrzustände angeben, die sich für die Durchführung des Energietransfers eignen.

Gemäß einer vorteilhaften Ausführungsvariante ist die erste Aktivierungsbedingung erfüllt, wenn ein Ladezustand des ersten oder des zweiten Energiespeichers kleiner als ein unterer Ladezustandsschwellenwert ist und der Ladezustand des anderen Energiespeichers größer oder größer gleich als ein zweiter Ladezustandsschwellenwert ist, der größer oder zumindest größer gleich als der erste Ladezustandsschwellenwert ist. Der untere Ladezustandsschwellenwert gibt hierbei eine untere Ladezustandsgrenze an, die im Fahrbetrieb nicht unterschritten werden soll. Der zweite Ladezustandsschwellenwert gibt einen Mindestladezustand an, den ein Energiespeicher haben soll, damit Energie aus diesem entnommen werden darf, um einen zu tief entladenen anderen Energiespeicher wieder aufzuladen.

Gemäß einer weiteren vorteilhaften Ausführungsvariante ist die erste Aktivierungsbedingung erfüllt, wenn eine betragsmäßige Differenz zwischen dem Ladezustand des ersten Energiespeichers und dem Ladezustand des zweiten Energiespeichers einen vorbestimmten ersten Differenzschwellenwert überschreitet. Der vorbestimmte erste Differenzschwellenwert gibt eine Grenze für die Abweichung der Ladezustände der beiden Energiespeicher an, bei deren Überschreiten Energie aus dem Energiespeicher mit höherem Ladezustand in den Energiespeicher mit niedrigerem Ladezustand transferiert wird.

Für den Energietransfer wird die elektrische Maschine des Energiespeichers mit niedrigerem Ladezustand üblicherweise generatorisch und die elektrische Maschine des Energiespeichers mit höherem Ladezustand elektromotorisch betrieben. Es wird jedoch betont, dass auch der umgekehrte Fall möglich ist, je nach Vorgabe der Sollladezustände der Energiespeicher, die durch den Energietransfer hergestellt oder zumindest angenähert werden sollen.

Vorstehend wurde bereits erwähnt, dass der erfindungsgemäße Energietransfer zwischen den Energiespeichern nur bei Vorliegen geeigneter Fahrzustände, die sich für die Durchführung des Energietransfers eignen, durchgeführt werden soll. Derartige Fahrzustände sind beispielsweise die Konstantfahrt, d. h. Fahrten mit konstanter Geschwindigkeit und Fahrten mit kleiner bis moderater positiver Beschleunigung oder Fahrten mit kleiner bis moderater Bremsbeschleunigung, d. h. negativer Fahrzeugbeschleunigung, da bei starken Beschleunigungsanforderungen oder starken Bremsanforderungen ein gleichzeitiger elektromotorischer Betrieb der einen und generatorischer Betrieb der anderen elektrischen Maschine die maximal erzielbare Beschleunigung oder Bremsrekuperationsenergie reduziert. Ferner muss das Fahrzeug im Falle eines Gliederzugs oder Gelenkbusses gestreckt bleiben. Eine Möglichkeit der erfindungsgemäßen Realisierung sieht daher vor, dass die erste Aktivierungsbedingung erfüllt ist, wenn eine momentane Fahrzeugbeschleunigung oder Bremsbeschleunigung betragsmäßig einen vorbestimmten Beschleunigungsschwellenwert unterschreitet. Der Beschleunigungsschwellenwert ist vorzugsweise so gewählt, dass die erste Aktivierungsbedingung nur bei Konstantfahrten und/oder bei moderater Beschleunigung oder Verzögerungsvorgängen erfüllt ist.

Gemäß einem bevorzugten Ausführungsbeispiel sind die erste elektrische Maschine und der erste Energiespeicher in einem ersten Leistungsnetz angeordnet und die zweite elektrische Maschine und der zweite Energiespeicher in einem zweitem Leistungsnetz angeordnet, wobei die beiden Leistungsnetze elektrisch nicht miteinander elektrisch gekoppelt oder koppelbar sind, so dass elektrische Energie nicht direkt zwischen den beiden Leistungsnetzen transferierbar ist. Der erfindungsgemäße Energietransfer über die mechanische Kopplung der Straße ist besonders vorteilhaft bei Fahrzeugen, in denen jedes Antriebssystems, z. B. jede angetriebene Achse, gemäß diesem Ausführungsbeispiel ein separates, unabhängiges Leistungsnetz aufweist, das jeweils einen Energiespeicher, den elektrischen Motor und die entsprechende Leistungselektronik aufweist.

Eine weitere Möglichkeit der erfindungsgemäßen Realisierung sieht vor, dass der Energietransfer nach Erfüllung der ersten Aktivierungsbedingung beendet wird, wenn eine betragsmäßige Differenz zwischen dem Ladezustand des ersten Energiespeichers und dem Ladezustand des zweiten Energiespeichers einen vorbestimmten zweiten Differenzschwellenwert unterschreitet und/oder wenn ein Ladezustand desjenigen Energiespeichers, der während des Energietransfers elektromotorisch betrieben wird, den zweiten Ladezustandsschwellenwert unterschreitet. Der zweite Differenzschwellenwert kann beispielsweise auf null festgelegt werden, so dass der Energietransfer beendet wird, bei dem die Ladezustände wieder angeglichen wurden.

Ferner besteht im Rahmen der Erfindung die Möglichkeit, eine Anpassung der Ladezustände der Energiespeicher auch ohne Energietransfer zwischen den beiden Energiespeichern vorzunehmen. Dies bedeutet vorliegend, dass hierbei nicht der Ladezustand eines Energiespeichers erhöht wird, während der Ladezustand des anderen Energiespeichers verringert wird, sondern dass die Energiespeicher hierbei unterschiedlich stark entladen oder unterschiedlich stark geladen werden bzw. nur einer der beiden Energiespeicher geladen oder entladen wird, um auf diese Weise eine betragsmäßige Differenz der Ladezustände zu verringern. Dies ist beispielsweise dann vorteilhaft, falls in der aktuellen Fahrsituation kein generatorischer Betrieb der einen elektrischen Maschine und ein gleichzeitiger elektromotorischer Betrieb der anderen elektrischen Maschine möglich oder gewünscht ist, z. B. bei einem starken Beschleunigungs- oder Bremsvorgang und/oder falls nur kleinere Ladezustandsdifferenzen ausgeglichen werden sollen.

Eine weitere Ausführungsform der Erfindung sieht daher vor, dass bei Erfüllung einer zweiten Aktivierungsbedingung, insbesondere zur Aktivierung einer Ladezustandsanpassung ohne Energietransfer zwischen den beiden Energiespeichern, und bei Fahrt mit einer im Wesentlichen konstanten Fahrgeschwindigkeit diejenige der beiden elektrischen Maschinen, deren zugeordneter elektrischer Energiespeicher den kleineren Ladezustand aufweist, so angesteuert wird, dass sie eine im Vergleich zur anderen elektrischen Maschine kleinere elektrische Leistung stellt. Dadurch wird der Energiespeicher mit dem kleineren Ladezustand relativ zum anderen Energiespeicher weniger stark entladen, so dass die Differenz der Ladezustände dadurch verringert wird.

Ferner kann bei Erfüllung der zweiten Aktivierungsbedingung zur Aktivierung einer Ladezustandsanpassung ohne Energietransfer zwischen den beiden Energiespeichern und bei einem Bremsbetrieb nur derjenige der elektrischen Energiespeicher im generatorischen Betrieb betrieben werden, dessen Ladezustand am kleinsten ist. Dadurch wird die im generatorischen Betrieb rekuperierte Bremsenergie nur demjenigen Energiespeicher zugeführt, der den kleineren Ladezustand aufweist, so dass die Differenz der Ladezustände durch diesen Betriebsmodus ebenfalls verringert wird.

Die zweite Aktivierungsbedingung kann beispielsweise dann erfüllt sein, wenn eine momentane Fahrzeugbeschleunigung oder Bremsbeschleunigung betragsmäßig einen vorbestimmten Beschleunigungsschwellenwert überschreitet oder falls eine betragsmäßige Differenz zwischen dem Ladezustand des ersten Energiespeichers und dem Ladezustand des zweiten Energiespeichers in einem vorbestimmten Bereich liegt, der beispielsweise unterhalb des ersten Differenzschwellenwerts liegt.

Der erste und/oder zweite Energiespeicher für elektrische Energie kann ein an sich bekannter Lithium-Ionen-Speicher oder ein Kondensatorspeicher, insbesondere ein Ultra-Cap-Speicher, sein.

Gemäß einem weiteren Gesichtspunkt der Erfindung wird eine Vorrichtung zum Energiemanagement in einem Kraftfahrzeug mit mindestens zwei angetriebenen Fahrzeugachsen bereitgestellt, wobei die Vorrichtung ausgebildet ist, das Verfahren wie in diesem Dokument offenbart auszuführen.

Die Erfindung betrifft ferner ein Kraftfahrzeug, insbesondere einen Gelenkbus oder einen Gliederzug, umfassend eine erste elektrische Maschine, die antriebsmäßig mit einer ersten Fahrzeugachse verbunden ist; einen ersten Energiespeicher für elektrische Energie, der zur Versorgung der ersten elektrischen Maschine vorgesehen ist; eine zweite elektrische Maschine, die antriebsmäßig mit einer zweiten Fahrzeugachse verbunden ist; und einen zweiten Energiespeicher für elektrische Energie, der zur Versorgung der zweiten elektrischen Maschine vorgesehen ist; sowie eine Vorrichtung zum Energiemanagement, die ausgebildet ist, das Verfahren wie in diesem Dokument offenbart auszuführen. Zur Vermeidung von Wiederholungen sollen rein verfahrensgemäß offenbarte Merkmale auch als vorrichtungsgemäß offenbart gelten und beanspruchbar sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Lastzuges mit einer Vorrichtung zum Energiemanagement gemäß einer Ausführungsform der Erfindung;
- Figur 2: eine schematische Ansicht eines Gelenkbusses mit einer Vorrichtung zum Energiemanagement gemäß einer Ausführungsform der Erfindung;
- Figur 3: ein Ablaufdiagram zur Illustration eines Verfahrens gemäß einer Ausführungsform der Erfindung; und
- Figuren 4A und 4B: eine stark schematisierte Illustration eines Energietransfers zwischen den Energiespeichern gemäß einer Ausführungsform der Erfindung.

Gleiche oder funktional äquivalente Elemente sind in allen Figuren mit denselben Bezugszeichen bezeichnet.

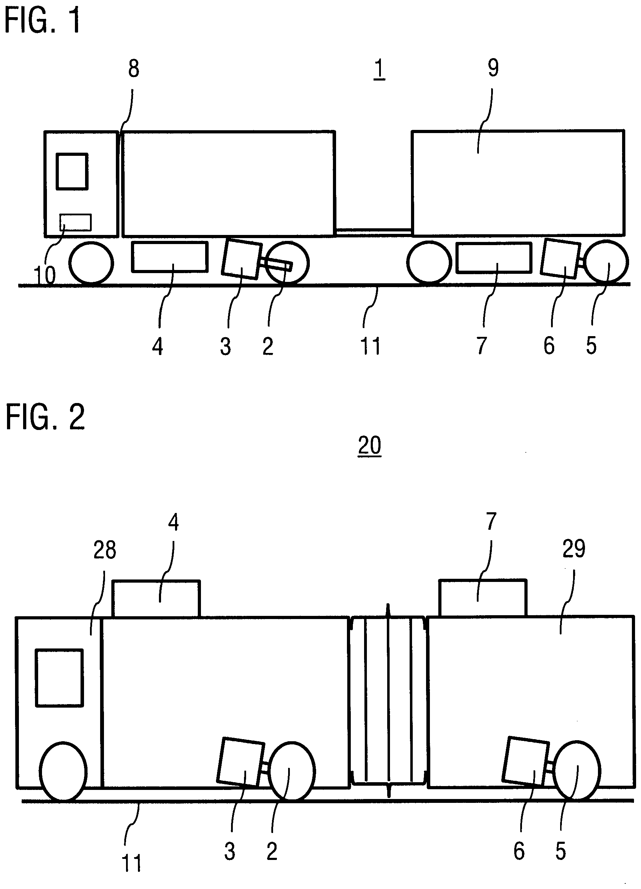

Figur 1 zeigt eine stark schematisierte Ansicht eines Lastzuges 1 mit einer Vorrichtung 10 zum Energiemanagement gemäß einer Ausführungsform der Erfindung. Der Lastzug 1 wird durch einen LKW 8 und einen daran angekoppelten Anhänger 9 gebildet. Der Lastzug 1 weist zwei elektromotorisch angetriebene Achsen 2, 5 auf.

Die angetriebene Hinterachse 2 des LKWs 8 wird von einem ersten Leistungsnetz angetrieben, das eine elektrische Maschine 3, die antriebsmäßig mit der Hinterachse 2 des LKWs 8 verbunden ist, einen Energiespeicher 4 für elektrische Energie, der zur Versorgung der ersten elektrischen Maschine 3 vorgesehen ist, und eine entsprechende Leistungselektronik aufweist. Die angetriebene Hinterachse 5 des Anhängers 9 wird von einem zweiten Leistungsnetz angetrieben, das ebenfalls eine elektrische Maschine 5, die antriebsmäßig mit der Hinterachse 5 des Anhängers 9 verbunden ist, einen Energiespeicher 7 für elektrische Energie, der zur Versorgung der elektrischen Maschine 6 vorgesehen ist, und eine entsprechende Leistungselektronik aufweist.

Die elektrischen Maschinen 3, 6, die Energiespeicher 4, 7 und die jeweilige Leistungselektronik können in an sich bekannter Weise ausgeführt sein.

Die beiden Leistungsnetze sind elektrisch nicht über einen Gleichspannungswandler und/oder Hochvolt-Leitungen miteinander gekoppelt, so dass kein direkter Energietransfer zwischen dem Leistungsnetz für das Antriebssystem der Achse 2 und dem Leistungsnetz für das Antriebssystem der Achse 5 möglich ist.

Im LKW ist ferner eine programmtechnisch eingerichtete Steuervorrichtung 10 vorgesehen, die für das zentrale Energiemanagement des Fahrzeugs zuständig ist und die über entsprechende Steuerbefehle die elektrischen Maschinen 3 und 6 ansteuern kann. Vorstehend wurde bereits erwähnt, dass sich im Verlaufe von Fahr- und Bremsmanövern über unterschiedliche Eigenschaften und Betriebsanforderungen innerhalb der Leistungsnetze verschiedene Ladezustände (SOCs) der Energiespeicher 4 und 7 einstellen können.

Beispielsweise wird bei einer Fahrzeugbeschleunigung aus fahrdynamischen Anforderungen verstärkt der in Fahrtrichtung vorne liegende Antrieb genutzt. Beim Verzögern dagegen wird hauptsächlicher der in Fahrtrichtung hinten liegende Antrieb zur Energierückgewinnung genutzt. Dadurch können sich im Fahrbetrieb über einen gewissen Zeitraum unterschiedliche Energieinhalte der "unabhängigen" Antriebssysteme ergeben. Diese sollten von Zeit zu Zeit oder gezielt nach Bedarf, geregelt oder gesteuert durch das zentrale Fahrzeugenergiemanagement, wieder auf ein bestimmtes - meist ausgeglichenes - Niveau gebracht werden. Die Steuervorrichtung 10 ist daher eingerichtet, ein solches Verfahren zum Energiemanagement auszuführen, insbesondere ein Verfahren zum sog. Balancing der Energiespeicher 4 und 7 auszuführen. Ferner ist es mit dem erfindungsgemäßen Ansatz auch möglich, eine absichtliche Verschiebung der Ladezustände herbeizuführen, falls gewünscht.

Figur 2 zeigt eine schematische Ansicht eines Gelenkbusses 20, der analog zu dem Lastzug 1 mit einer Vorrichtung 10 zum Energiemanagement gemäß einer Ausführungsform der Erfindung ausgestattet ist und bei dem der Vorderwagen 28 die erste angetriebene Achse 2 mit der zugeordneten ersten elektrischen Maschine 3 und dem ersten elektrischen Energiespeicher 4 aufweist und der Hinterwagen 29 die zweite angetriebene Achse 5 mit der zugeordneten zweiten elektrischen Maschine 6 und dem zweiten elektrischen Energiespeicher 7 aufweist. Auch hier sind die beiden Leistungsnetze, die jeweils eine der elektrischen Maschinen und einen der Energiespeicher aufweisen, nicht elektrisch miteinander gekoppelt.

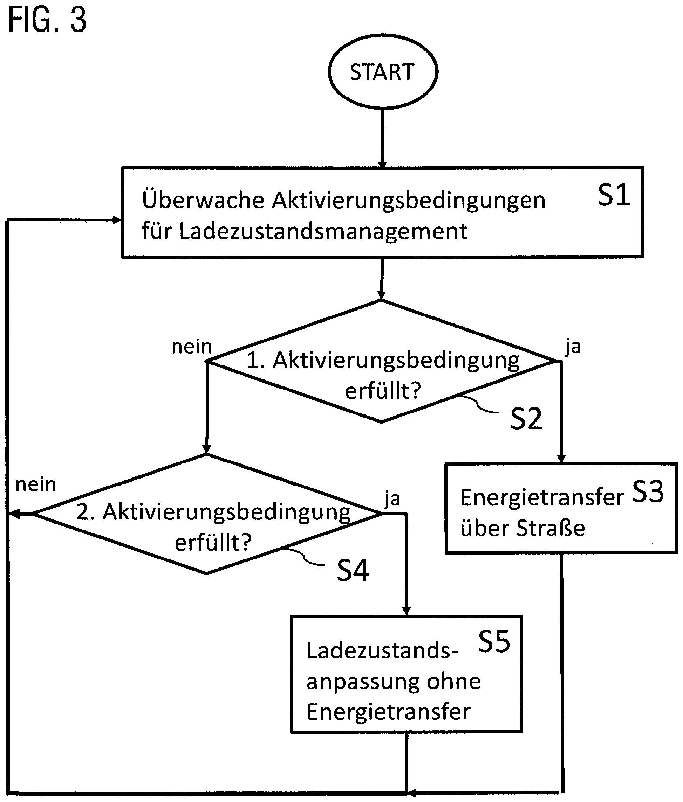

Figur 3 beschreibt beispielhaft ein Ablaufdiagram zur Illustration eines Verfahrens zum sog. Balancing der Energiespeicher 4 und 7 gemäß einer Ausführungsform der Erfindung.

Im Rahmen des Ladezustandsmanagements kann ein sog. Balancing der Ladezustände der beiden Energiespeicher 4 und 7 prinzipiell auf zwei unterschiedliche Arten erfolgen: Erstens durch einen Energietransfer zwischen den beiden Energiespeichern 4 und 7 über die mechanische Kopplung der beiden Antriebssysteme über die Straße 11, wobei sich ein Ladezustand eines Energiespeichers verringert und ein Ladezustand der anderen Energiespeichers erhöht; zweitens durch eine Anpassung der Ladezustände der Energiespeicher, indem die Energiespeicher unterschiedlich stark entladen oder unterschiedlich stark geladen werden. Diese beiden Arten, ein Ladezustandsmanagement zum Balancing der Energiespeicher 4 und 7 auszuführen, werden jeweils durchgeführt, wenn entsprechende Aktivierungsbedingungen erfüllt sind.

In Schritt S1 werden daher im Fahrbetrieb des Fahrzeugs 1 fortlaufend vorgegebene Aktivierungsbedingungen für das Ladezustandsmanagement überwacht. Hierzu werden fortlaufend die Ladezustände der Energiespeicher 4 und 7 ermittelt und auf vorgegebene Schwellenwerte überprüft. Ferner werden weitere Fahrzeugbetriebsparameter ermittelt, insbesondere Fahrzeugbetriebsparameter, aus denen der Geschwindigkeitsverlauf und/oder Beschleunigungsverlauf des Fahrzeugs ableitbar ist.

In Schritt S1 wird insbesondere eine erste Aktivierungsbedingung überwacht, die, wenn erfüllt, einen Energietransfer zwischen dem ersten Energiespeicher 4 und dem zweiten Energiespeicher 7 startet.

Die erste Aktivierungsbedingung ist im vorliegenden Beispiel dann erfüllt, wenn erstens eine betragsmäßige Differenz zwischen dem Ladezustand des ersten Energiespeichers 4 und dem Ladezustand des zweiten Energiespeichers 7 einen vorbestimmten ersten Differenzschwellenwert überschreitet, d. h., wenn ein Energiespeicher um den Differenzschwellenwert stärker als der andere Energiespeicher entladen ist. Die erste Aktivierungsbedingung ist ferner nur dann erfüllt, wenn ein geeigneter Fahrzustand vorliegt, der für den gleichzeitigen generatorischen der einen und den elektromotorischen Betrieb der anderen elektrischen Maschine geeignet ist. Dies ist bei Konstantfahrten und bei Fahrten mit geringen Beschleunigungen oder Verzögerungen der Fall. Die erste Aktivierungsbedingung ist somit erfüllt, wenn zweitens auch eine momentane Fahrzeugbeschleunigung oder Bremsbeschleunigung betragsmäßig einen vorbestimmten Beschleunigungsschwellenwert unterschreitet.

Ergibt die Prüfung in Schritt S2, dass die erste Aktivierungsbedingung erfüllt ist, wird in Schritt S3 der Energietransfer zwischen den beiden Energiespeichern über die Straße 11 gestartet. Hierbei wird ein generatorischer Betrieb derjenigen elektrischen Maschine gestartet, deren zugeordneter Energiespeicher den zu kleinen Ladezustand aufweist. Ist beispielsweise der Ladezustand des Energiespeichers 7 zu klein, wird ein generatorischer Betrieb der elektrischen Maschine 6 gestartet. Die andere elektrische Maschine 3 wird von der Steuervorrichtung 10 in einem elektromotorischen Betrieb betrieben. Die von der Steuervorrichtung 10 gestellte Leistungsanforderung an die Maschine 3 ist dabei so hoch, dass die elektrische Maschine 3 genügend Antriebsleistung zum Antrieb der Achse 2 stellt, um die angeforderte Antriebsleistung für das Fahrzeug zu erzeugen, und ferner zusätzliche Leistung bereitstellt, die über einen generatorischen Betrieb der Maschine rekuperiert werden kann, um den Energiespeicher 4 aufzuladen.

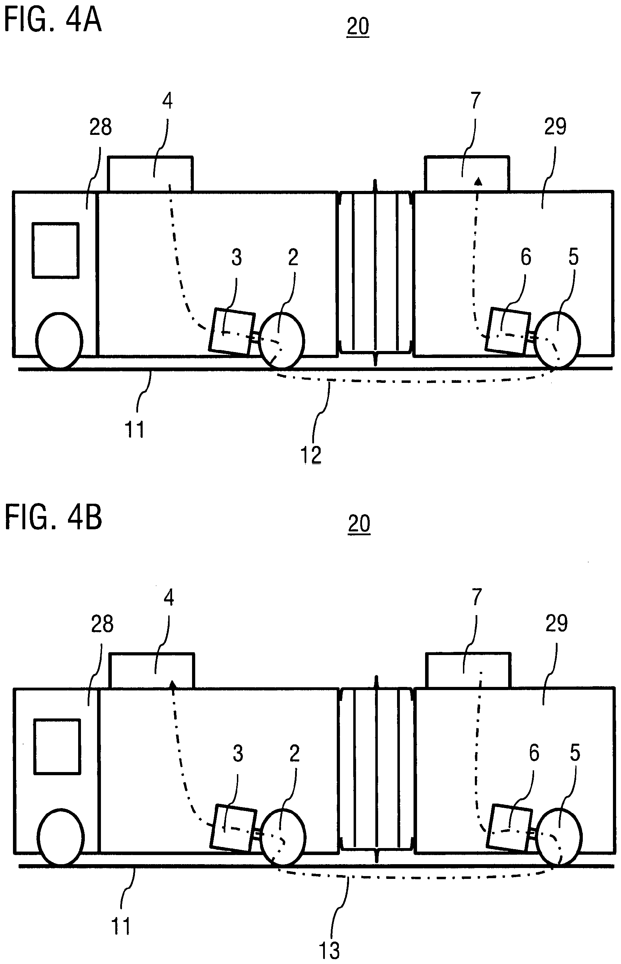

Figur 4A illustriert beispielhaft einen Energietransfer von dem Energiespeicher 4 in den Energiespeicher 7 über die mechanische Kopplung über die Straße 11. Der Energiefluss ist schematisch durch die strichgepunktete Linie 12 dargestellt.

Der Energiespeicher 4 versorgt die elektrische Maschine 3 mit elektrischer Energie. Die elektrische Maschine 3 treibt die Achse 2 an und wandelt die elektrische Energie des Energiespeichers 4 somit in Bewegungsenergie der Achse 2 um (abzüglich der Energieverluste in Form von Wärme). Über die Straße 11 und die von den Achsen 2, 5 angetriebenen Räder sind die Achsen 2 und 5 mechanisch miteinander gekoppelt. Folglich wird durch die von der Achse 2 erzeugte Bewegungsenergie des Fahrzeugs 20 auch die Achse 5 angetrieben. Im generatorischen Betrieb der elektrischen Maschine 6 kann aufgrund der Bewegungsenergie der Achse 5 Energie rekuperiert werden, die in Form von elektrischer Energie dem Energiespeicher 7 zugeführt wird. Ein Teil der dem Energiespeicher 4 entnommenen Energie kann somit zum Laden des Energiespeichers 7 verwendet werden - ohne dass die beiden Energiespeicher 4 und 7 elektrisch über HV-Leitungen und Koppelelemente miteinander koppelbar wären.

Falls dagegen der Ladezustand des ersten Energiespeichers 4 erhöht werden soll, kann entsprechend umgekehrt ein elektromotorischer Betrieb der zweiten elektrischen Maschine 6 und ein gleichzeitiger generatorischer Betrieb der ersten elektrischen Maschine 3 dazu genutzt werden, um den Ladezustand des ersten Energiespeichers 4 anzuheben, während der Ladezustand des zweiten Energiespeichers 7 erniedrigt wird. Dies ist entsprechend in Figur 4B illustriert.

Der generatorische Betrieb der einen elektrischen Maschine und der gleichzeitige elektromotorische Betrieb der anderen elektrischen Maschine wird beendet, wenn die Ladezustände der beiden Energiespeicher 4, 7 wieder ausgeglichen sind oder falls vorher die momentane Fahrzeugbeschleunigungsanforderung den Beschleunigungsschwellenwert überschreitet.

Ist die erste Aktivierungsbedingung nicht erfüllt, wird in Schritt S4 geprüft, ob eine zweite Aktivierungsbedingung erfüllt ist. Falls ja, startet die Steuervorrichtung 10 einen Betriebsmodus, bei dem eine Anpassung der Ladezustände der Energiespeicher 4, 7 auch ohne Energietransfer zwischen den beiden Energiespeichern erfolgt.

Die zweite Aktivierungsbedingung kann beispielsweise dann erfüllt sein, falls eine betragsmäßige Differenz zwischen dem Ladezustand des ersten Energiespeichers und dem Ladezustand des zweiten Energiespeichers in einem vorbestimmten Bereich liegt, der beispielsweise unterhalb des ersten Differenzschwellenwerts liegt. Ferner wird unterschieden, ob eine Konstantfahrt oder ein Bremsvorgang vorliegt.

Bei einer Konstantfahrt, d. h. einer Fahrt mit einer im Wesentlichen konstanten Fahrgeschwindigkeit, wird diejenige der beiden elektrischen Maschinen, deren zugeordneter elektrischer Energiespeicher den kleineren Ladezustand aufweist, so angesteuert, dass sie eine im Vergleich zur anderen elektrischen Maschine kleinere elektrische Leistung stellt, , ohne die Fahrdynamik merklich zu beeinflussen. Dadurch wird der Energiespeicher mit dem kleineren Ladezustand relativ zum anderen Energiespeicher weniger stark entladen, so dass die Differenz der Ladezustände dadurch verringert wird.

Bei einem Bremsbetrieb des Fahrzeugs kann dagegen nur derjenige der elektrischen Energiespeicher im generatorischen Betrieb betrieben werden, dessen Ladezustand am kleinsten ist. Dadurch wird die im generatorischen Betrieb rekuperierte Bremsenergie nur demjenigen Energiespeicher zugeführt, der den kleineren Ladezustand aufweist, so dass die Differenz der Ladezustände durch diesen Betriebsmodus ebenfalls verringert wird.

Mit diesen Betriebsmodi kann auch im Fahrbetrieb eine Verschiebung der Energie von einem vollen zu einem leeren Energiespeicher realisiert werden, falls z. B. ein Energiespeicher aufgrund einer Störung oder generell nicht extern wiederaufladbar ist. So kann mit dem Antriebssystem des vollen Energiespeichers das Fahrzeug beschleunigt werden und mit dem Antriebssystem des "leeren" Speichers die Energie rekuperiert werden. Dadurch ist im Fahrbetrieb eine Verschiebung der Energie vom vollen/ geladenen zum leeren Energiespeicher möglich. Bis zur nächsten Lademöglichkeit kann damit der ladbare Energiespeicher (auf Zielwert oder Anforderung) entladen werden.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere kann das Fahrzeug mehr als zwei angetriebene Achse und/oder mehr als zwei Energiespeicher zur Versorgung der elektrischen Maschinen aufweisen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Gliederzug
- 2: Erste angetriebene Achse
- 3: Erste elektrische Maschine
- 4: Erster Energiespeicher für elektrische Energie
- 5: Zweite angetriebene Achse
- 6: Zweite elektrische Maschine
- 7: Zweiter Energiespeicher für elektrische Energie
- 8: Zugfahrzeug
- 9: Anhänger
- 10: Steuervorrichtung
- 11: Straße
- 12: Energietransfer vom ersten in den zweiten Energiespeicher
- 13: Energietransfer vom zweiten in den ersten Energiespeicher
- 20: Gelenkbus
- 28: Vorderwagen
- 29: Hinterwagen

## Patentansprüche

1. Verfahren zum Energiemanagement in einem Kraftfahrzeug mit mindestens zwei angetriebenen Fahrzeugachsen,
wobei das Kraftfahrzeug (1; 20) eine erste elektrische Maschine (3), die antriebsmäßig mit einer ersten Fahrzeugachse (2) verbunden ist, einen ersten Energiespeicher (4) für elektrische Energie, der zur Versorgung der ersten elektrischen Maschine (3) vorgesehen ist, eine zweite elektrische Maschine (6), die antriebsmäßig mit einer zweiten Fahrzeugachse (5) verbunden ist, und einen zweiten Energiespeicher (7) für elektrische Energie, der zur Versorgung der zweiten elektrischen Maschine (6) vorgesehen ist, umfasst;
wobei bei Erfüllung einer ersten Aktivierungsbedingung (S2) zur Aktivierung eines Energietransfers zwischen dem ersten und zweiten Energiespeicher, ein elektromotorischer Betrieb der ersten elektrischen Maschine und ein gleichzeitiger generatorischer Betrieb der zweiten elektrischen Maschine oder umgekehrt gestartet wird (S3), um unter Ausnutzung einer mechanischen Kopplung der ersten und der zweiten elektrischen Maschine (3, 6) über eine Straße (11), auf der sich das Kraftfahrzeug (1; 20) momentan bewegt, Energie von dem ersten (4) in den zweiten (7) Energiespeicher oder umgekehrt zu übertragen, **dadurch gekennzeichnet,**
**dass** die erste und die zweite elektrische Maschine unabhängig voneinander sowohl elektromotorisch als auch generatorisch betreibbar sind; und
**dass** die erste Aktivierungsbedingung (S2) erfüllt ist, wenn eine momentane Fahrzeugbeschleunigung oder Bremsbeschleunigung betragsmäßig einen vorbestimmten Beschleunigungsschwellenwert unterschreitet.

2. Verfahren nach Anspruch 1, **dadurch gekennzeichnet, dass** das Fahrzeug ein Gelenkbus (20) oder ein Gliederzug (1) ist.

3. Verfahren nach Anspruch 1 oder 2, **dadurch gekennzeichnet, dass** die erste Aktivierungsbedingung (S2) erfüllt ist,
a) wenn ein Ladezustand des ersten (4) oder des zweiten (7) Energiespeichers kleiner als ein unterer Ladezustandsschwellenwert ist und der Ladezustand des anderen Energiespeichers größer als ein zweiter Ladezustandsschwellenwert ist, der größer als der erste Ladezustandsschwellenwert ist; und/oder
b) wenn eine betragsmäßige Differenz zwischen dem Ladezustand des ersten Energiespeichers (4) und dem Ladezustand des zweiten Energiespeichers (7) einen vorbestimmten ersten Differenzschwellenwert überschreitet.

4. Verfahren nach einem der vorhergehenden Ansprüche, **dadurch gekennzeichnet, dass** die erste elektrische Maschine (3) und der erste Energiespeicher (4) in einem ersten Leistungsnetz angeordnet sind, dass die zweite elektrische Maschine (6) und der zweite Energiespeicher (7) in einem zweitem Leistungsnetz angeordnet sind, wobei die beiden Leistungsnetze elektrisch nicht miteinander gekoppelt oder koppelbar sind, so dass elektrische Energie nicht direkt zwischen den beiden Leistungsnetzen transferierbar ist.

5. Verfahren nach einem der vorhergehenden Ansprüche, **dadurch gekennzeichnet, dass** der Energietransfer nach Erfüllung der ersten Aktivierungsbedingung beendet wird,
a) wenn eine betragsmäßige Differenz zwischen dem Ladezustand des ersten Energiespeichers (4) und dem Ladezustand des zweiten Energiespeichers (7) einen vorbestimmten zweiten Differenzschwellenwert unterschreitet; und/oder
b) wenn ein Ladezustand desjenigen Energiespeichers, der während des Energietransfers elektromotorisch betrieben wird, den zweiten Ladezustandsschwellenwert unterschreitet.

6. Verfahren nach einem der vorhergehenden Ansprüche, **dadurch gekennzeichnet, dass** bei Erfüllung einer zweiten Aktivierungsbedingung (S4), insbesondere zur Aktivierung einer Ladezustandsanpassung ohne direkten Energietransfer zwischen den beiden Energiespeichern,
a) bei Fahrt mit einer im Wesentlichen konstanten Fahrgeschwindigkeit diejenige der beiden elektrischen Maschinen, deren zugeordneter elektrischer Energiespeicher den kleineren Ladezustand aufweist, eine im Vergleich zur anderen elektrischen Maschine kleinere elektrische Leistung stellt; und/oder
b) bei einem Bremsbetrieb nur derjenige der elektrischen Energiespeicher im generatorischen Betrieb betrieben wird, dessen Ladezustand am kleinsten ist.

7. Verfahren nach einem der vorhergehenden Ansprüche, **dadurch gekennzeichnet,**
a) **dass** das Kraftfahrzeug ein als Hybrid- oder Elektrofahrzeug ausgeführtes Nutzfahrzeug ist; und/oder
b) **dass** der erste und/oder zweite Energiespeicher für elektrische Energie ein Lithium-lonen-Speicher oder ein Kondensatorspeicher, insbesondere ein Ultra-Cap-Speicher, ist.

8. Vorrichtung (10) zum Energiemanagement in einem Kraftfahrzeug (1; 20) mit mindestens zwei angetriebenen Fahrzeugachsen (2, 5), wobei die Vorrichtung (10) ausgebildet ist, das Verfahren nach einem der vorhergehenden Ansprüche durchzuführen.

9. Kraftfahrzeug, insbesondere Gelenkbus (20) oder Gliederzug (1), umfassend eine erste elektrische Maschine (3), die antriebsmäßig mit einer ersten Fahrzeugachse (2) verbunden ist, einen ersten Energiespeicher (4) für elektrische Energie, der zur Versorgung der ersten elektrischen Maschine (3) vorgesehen ist, eine zweite elektrische Maschine (6), die antriebsmäßig mit einer zweiten Fahrzeugachse (5) verbunden ist, und einen zweiten Energiespeicher (7) für elektrische Energie, der zur Versorgung der zweiten elektrischen Maschine (6) vorgesehen ist; und eine Vorrichtung (10) nach Anspruch 8.

## Claims

1. A method for energy management in a motor vehicle having at least two driven vehicle axles,
wherein the motor vehicle (1; 20) comprises a first electric machine (3) which has a drive connection to a first vehicle axle (2), a first energy store (4) for electrical energy, which energy store (4) is provided for supplying the first electric machine (3), a second electric machine (6) which has a drive connection to a second vehicle axle (5), and a second energy store (7) for electrical energy, which energy store (7) is provided for supplying the second electric machine (6);
when a first activation condition (S2) for the activation of an energy transfer between the first and second energy stores is satisfied, an electromotive operating mode of the first electric machine and a simultaneous generator operating mode of the second electric machine, or vice versa, are started (S3), in order to transmit energy from the first energy store (4) into the second energy store (7), or vice versa, by utilizing a mechanical coupling of the first and second electric machines (3, 6) by means of a road (11) on which the motor vehicle (1; 20) is instantaneously moving, **characterized in that** the first and second electric machines can be operated independently of one another both as an electric motor and as a generator; and
**in that** the first activation condition (S2) is satisfied if an instantaneous vehicle acceleration or braking acceleration undershoots in absolute value a predetermined acceleration threshold value.

2. The method according to Claim 1, **characterized in that** the vehicle is an articulated bus (20) or an articulated train (1).

3. The method according to Claim 1 or 2, **characterized in that** the first activation condition (S2) is satisfied
a) if a state of charge of the first energy store (4) or of the second energy store (7) is less than a lower state of charge threshold value, and the state of charge of the other energy store is greater than a second state of charge threshold value which is greater than the first state of charge threshold value; and/or
b) if a difference in absolute value between the state of charge of the first energy store (4) and the state of charge of the second energy store (7) exceeds a predetermined first difference threshold value.

4. The method according to one of the preceding claims, **characterized in that** the first electric machine (3) and the first energy store (4) are arranged in a first power supply system, **in that** the second electric machine (6) and the second energy store (7) are arranged in a second power supply system, wherein the two power supply systems are not, or cannot be, coupled electrically to one another, with the result that electrical energy cannot be transferred directly between the two power supply systems.

5. The method according to one of the preceding claims, **characterized in that** the energy transfer is ended after the first activation condition has been satisfied,
a) if a difference in absolute value between the state of charge of the first energy store (4) and the state of charge of the second energy store (7) undershoots a predetermined second difference threshold value; and/or
b) if a state of charge of that energy store which is operated in an electric motor mode during the energy transfer undershoots the second state of charge threshold value.

6. The method according to one of the preceding claims, **characterized in that** when a second activation condition (S4), in particular for the activation of adaptation of a state of charge without direct energy transfer between the two energy stores, is satisfied,
a) in the case of travel at an essentially constant velocity that electric machine of the two electric machines whose assigned electric energy store has the smaller state of charge makes available a lower level of electrical power in comparison with the other electric machine; and/or
b) in the case of a braking operating mode only that electrical energy store of the electrical energy stores whose state of charge is the smallest is operated in the generator operating mode.

7. The method according to one of the preceding claims, **characterized**
a) **in that** the motor vehicle is a utility vehicle which is embodied as a hybrid vehicle or an electric vehicle; and/or
b) **in that** the first and/or second energy store for electrical energy is a lithium-ion store or a capacitor store, in particular an ultra-cap store.

8. A device (10) for energy management in a motor vehicle (1; 20) having at least two driven vehicle axles (2, 5), wherein the device (10) is designed to carry out the method according to one of the preceding claims.

9. A motor vehicle, in particular articulated bus (20) or articulated train (1), comprising a first electric machine (3) which has a drive connection to a first vehicle axle (2), a first energy store (4) for electrical energy, which energy store (4) is provided for supplying a first electric machine (3), a second electric machine (6) which has a drive connection to a second vehicle axle (5), and a second energy store (7) for electrical energy, which energy store (7) is provided for supplying the second electric machine (6); and a device (10) according to Claim 8.

## Revendications

1. Procédé, destiné à la gestion d'énergie dans un véhicule automobile, disposant d'au moins deux axes de véhicule entraînés,
le véhicule automobile (1 ; 20) comprenant un premier moteur électrique (3), qui est relié en entraînement avec un premier axe du véhicule (2), un premier accumulateur d'énergie (4), destiné à de l'énergie électrique qui est prévue pour alimenter le premier moteur électrique (3), un deuxième moteur électrique (6), qui est relié en entraînement avec un deuxième axe du véhicule (5) et un deuxième accumulateur d'énergie (7), destiné à de l'énergie électrique qui est prévue pour alimenter le deuxième moteur électrique (6) ;
si une première condition d'activation (S2) pour l'activation d'un transfert d'énergie entre le premier et le deuxième accumulateurs d'énergie est satisfaite, un fonctionnement en mode moteur électrique du premier moteur électrique et un fonctionnement simultané en mode générateur du deuxième moteur électrique ou inversement étant démarré (S3), pour, par exploitation d'un accouplement mécanique du premier et du deuxième moteurs électriques (3, 6) sur une route (11), sur laquelle le véhicule automobile (1 ; 20) se déplace à l'instant, transmettre de l'énergie du premier (4) dans le deuxième (7) accumulateur d'énergie ou inversement, **caractérisé**
**en ce que** le premier et le deuxième moteurs électriques sont susceptibles de fonctionner, indépendamment l'un de l'autre, aussi bien en mode moteur électrique, qu'en mode générateur ; et
**en ce que** la première condition d'activation (S2) est satisfaite si une accélération momentanée du véhicule ou une ou une accélération de freinage dépasse au niveau de son montant une valeur seuil d'accélération prédéfinie.

2. Procédé selon la revendication 1, **caractérisé en ce que** le véhicule est un bus articulé (20) ou un train articulé (1).

3. Procédé selon la revendication 1 ou 2, **caractérisé en ce que** la première condition d'activation (S2) est satisfaite
a) lorsqu'un état de charge du premier (4) ou du deuxième (7) accumulateur d'énergie est inférieur à une valeur seuil inférieure d'état de charge et si l'état de charge de l'autre accumulateur d'énergie est supérieur à une deuxième valeur seuil d'état de charge qui est supérieure à la première valeur seuil d'état de charge ; et/ou
b) lorsqu'une différence au niveau de montant entre l'état de charge du premier accumulateur d'énergie (4) et l'état de charge du deuxième accumulateur d'énergie (7) dépasse une première valeur seuil différentielle prédéfinie.

4. Procédé selon l'une quelconque des revendications précédentes, **caractérisé en ce que** le premier moteur électrique (3) et le premier accumulateur d'énergie (4) sont placés dans un premier réseau de puissance, **en ce que** le deuxième moteur électrique (6) et le deuxième accumulateur d'énergie (7) sont placés dans un deuxième réseau de puissance, les deux réseaux de puissance n'étant par accouplés ou susceptibles d'être accouplés électriquement l'un avec l'autre, de sorte que de l'énergie électrique n'est pas directement transférable entre les deux réseaux de puissance.

5. Procédé selon l'une quelconque des revendications précédentes, **caractérisé en ce qu'**après satisfaction à la première condition d'activation, le transfert d'énergie prend fin
a) lorsqu'une différence au niveau du montant entre l'état de charge du premier accumulateur d'énergie (4) et l'état de charge du deuxième accumulateur d'énergie (7) n'atteint pas une deuxième valeur seuil différentielle prédéfinie ; et/ou
b) lorsqu'un état de charge de l'accumulateur d'énergie qui pendant le transfert d'énergie fonctionne en mode moteur électrique n'atteint pas la deuxième valeur seuil différentielle.

6. Procédé selon l'une quelconque des revendications précédentes, **caractérisé en ce que** lors de la satisfaction d'une deuxième condition d'activation (S4), notamment pour activer une adaptation de charge sans transfert d'énergie direct entre les deux accumulateurs d'énergie,
a) en cas de conduite à une vitesse de conduite sensiblement constante, celui parmi les deux moteurs électriques dont l'accumulateur d'énergie électrique associé présente l'état de charge le plus faible met à disposition une puissance électrique inférieure, comparativement à celle de l'autre moteur électrique ; et/ou
b) lors d'un actionnement du frein, seul l'accumulateur d'énergie dont l'état de charge est le plus faible fonctionne en mode générateur.

7. Procédé selon l'une quelconque des revendications précédentes, **caractérisé**
a) **en ce que** le véhicule automobile est un utilitaire réalisé en tant que véhicule hybride ou en tant que véhicule électrique ; et/ou
b) **en ce que** le premier et/ou le deuxième accumulateur d'énergie destiné à de l'énergie électrique est un accumulateur lithium-ion ou un accumulateur à condensateur, notamment un accumulateur Ultra Cap.

8. Dispositif (10), destiné à la gestion d'énergie dans un véhicule automobile (1 ; 20) disposant d'au moins deux axes de véhicule entraînés (2, 5), le dispositif (10) étant conçu pour réaliser le procédé selon l'une quelconque des revendications précédentes.

9. Véhicule automobile, notamment bus articulé (20) ou train articulé (1), comprenant un premier moteur électrique (3), qui est relié en entraînement avec un premier axe du véhicule (2), un premier accumulateur d'énergie (4), destiné à de l'énergie électrique qui est prévue pour alimenter le premier moteur électrique (3), un deuxième moteur électrique (6) qui est relié en entraînement avec un deuxième axe du véhicule (5) et un deuxième accumulateur d'énergie (7) destiné à de l'énergie électrique qui est prévue pour alimenter le deuxième moteur électrique (6) ; et un dispositif (10) selon la revendication 8.
